# EUROPÄISCHE PATENTSCHRIFT

(11) **EP 0 433 484 B1**
(45) Veröffentlichungstag und Bekanntmachung des Hinweises auf die Patenterteilung: **10.11.1993**
(21) Anmeldenummer: 89123699.4
(22) Anmeldetag: 21.12.1989
(51) Int. Cl.: F16B 25/00

(54) **Gewindeformende Schraube**
Thread forming screw
Vis autotaraudeuse

(43) Veröffentlichungstag der Anmeldung: 26.06.1991
(73) Patentinhaber: LUDWIG HETTICH SCHRAUBENFABRIK GmbH & Co., D-78713 Schramberg-Sulgen (DE)
(72) Erfinder: Hettich, Stefan, D-7230 Schramberg (DE); Hettich, Ulrich, D-7239 Fluorn-Winzeln (DE)
(74) Vertreter: Liesegang, Roland, Dr.-Ing.

(56) Entgegenhaltungen:
- EP-A- 0 141 235
- DE-A- 3 005 166
- FR-A- 1 482 415
- FR-A- 2 500 090
- GB-A- 1 482 624
- US-A- 3 742 541
- US-A- 3 937 119

## Beschreibung

Die Erfindung betrifft eine gewindeformende Schraube nach dem Oberbegriff des Patentanspruchs 1 (EP-A-0 141 235)
Zur Verminderung des Eindrehmoments und zur Erhöhung des Lösemoments derartiger Schrauben ist aus der EP-A-0 141 235 bereits bekannt, den Gewindegrat als wellenförmige Schneide auszubilden. Die durch diese wellenförmige Ausbildung des Gewindegrats erzielte Wirkung ist jedoch nicht voll zufriedenstellend. Aufgabe der vorliegenden Erfindung ist es deshalb, gewindeformende Schrauben der eingangs erwähnten Art so zu verbessern, daß das Eindrehmoment noch stärker reduziert und das Lösemoment noch weiter erhöht und darüberhinaus eine Spanbildung vermieden wird, dabei aber eine wirtschaftliche Herstellung der Schraube beizubehalten. Gelöst wird diese Aufgabe durch die Merkmale des Kennzeichens des Patentanspruchs 1.

Gemäß der Erfindung wird also der Gewindegrat durch Ausnehmungen derart unterbrochen, daß Schneidezähne entstehen, deren Schneidkanten in Eindrehrichtung des Gewindes weisen. Diese Schneidezähne bzw. deren Schneidkanten reduzieren das erforderliche Eindrehmoment beträchtlich, wohingegen die Ausnehmungen als Sperre in Gegenrichtung wirken, was zu einer wesentlichen Erhöhung des Lösemoments führt. Außerdem wird eine Spanbildung aufgrund der Verdrängungswirkung der bugförmigen Schneide im wesentlichen vermieden. Trotzdem kann die Schraube vergleichsweise wirtschaftlich hergestellt werden.

Die Erfindung wird nachfolgend anhand der Zeichnung näher erläutert. Es zeigen:
- Fig. 1: die Schraube in Seitenansicht,
- Fig. 2: eine Ansicht in Richtung des Pfeils A von Fig. 1,
- Fig. 3: eine Teilansicht in Richtung des Pfeils B von Fig. 4,
- Fig. 4: eine Abwicklung eines Teilbereichs eines Gewindegangs,
- Fig. 5: eine Ansicht in Richtung des Pfeils C von Fig. 4,
- Fig. 6: eine Abwicklung eines Teilbereichs eines Gewindegangs einer Abwandlungsform,
- Fig. 7: eine Ansicht in Richtung des Pfeils D von Fig. 6, und
- Fig. 8: einen Schnitt in Richtung des Pfeils E von Fig. 7.

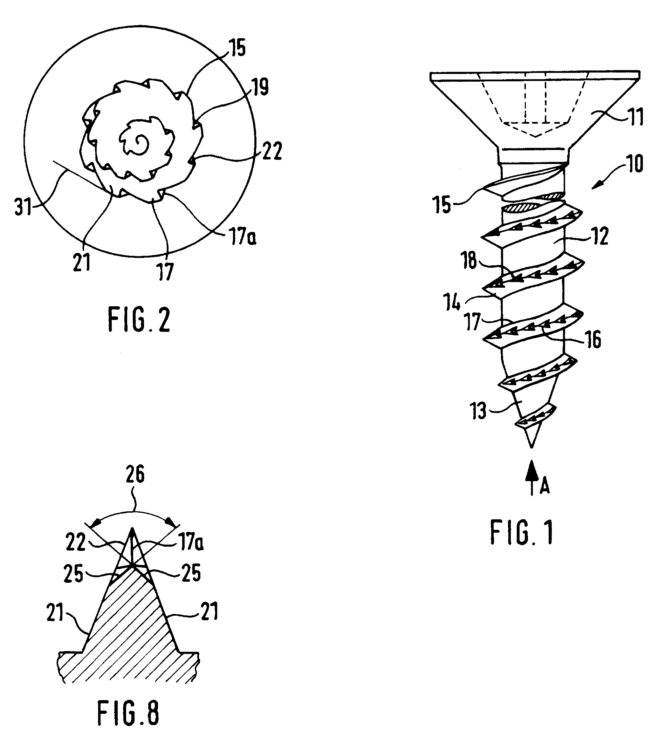

Gemäß Fig. 1 weist die im ganzen mit 10 bezeichnete Schraube eigen Schraubenkopf 11, einen zylindrischen Schraubenschaft 12 und eine Schraubenspitze 13 auf. Dabei ist der Schraubenschaft 12 ein geradliniger Zylinder mit gleichem Durchmesser über seine gesamte Länge, während die Schraubenspitze 13 sich vom Schraubenschaft aus kontinuierlich bis zu ihrem Spitzende hin verjüngt. Ein Schraubengewinde 14 erstreckt sich über den gesamten Schaft 12 und die Schraubenspitze 13 bis zu deren Spitzende. Mit 15 ist der Gewindegrat bezeichnet, also die umlaufende Außenkante der Gewindegänge des Schraubengewindes 14. Der Gewindegrat 15 verläuft ebenfalls von der Verbindungsstelle zwischen Schraubenkopf 11 und Schraubenschaft 12 über den gesamten Schaft und die gesamte Stütze 13 bis zum Spitzende der Schraube, wobei der Gewindedurchmesser durch den Abstand des Gewindegrats 15 zur Schraubmittelachse bestimmt wird.

Das Wesentliche ist nun, daß der Gewindegrat 15 in Abständen durch Ausnehmungen 16 unterbrochen ist, derart, daß die stehenbleibenden Gratabschnitte Schneidezähne 17 mit in Einschraubrichtung der Schraube weisender Schneidkante 17a bilden. Die Teilung für die Schneidezähne ist dabei beispielsweise so vorgenommen, daß sechs bis zwanzig Zähne pro Gewindegang entstehen, wobei die Anzahl der Zähne zur Schraubenspitze hin abnimmt. Wie am besten aus den Figuren 2, 3, 4 und 5 ersichtlich ist, sind die dem Grat 15 unterbrechenden Ausnehmungen 16 so ausgebildet, daß die erwähnte Schneidkante 17a entsteht, wobei sich am Grund der Ausnehmung eine Fläche 18 bildet, die in Ausdrehrichtung der Schraube als Sperre wirkt. Die die Schneidkante 17a bildenden Schneidflanken 19 schneiden in einem Winkel 20 von vorzugsweise 60 bis 90 Grad die Gewindeflankenflächen 21, und zwar an Kanten 22.

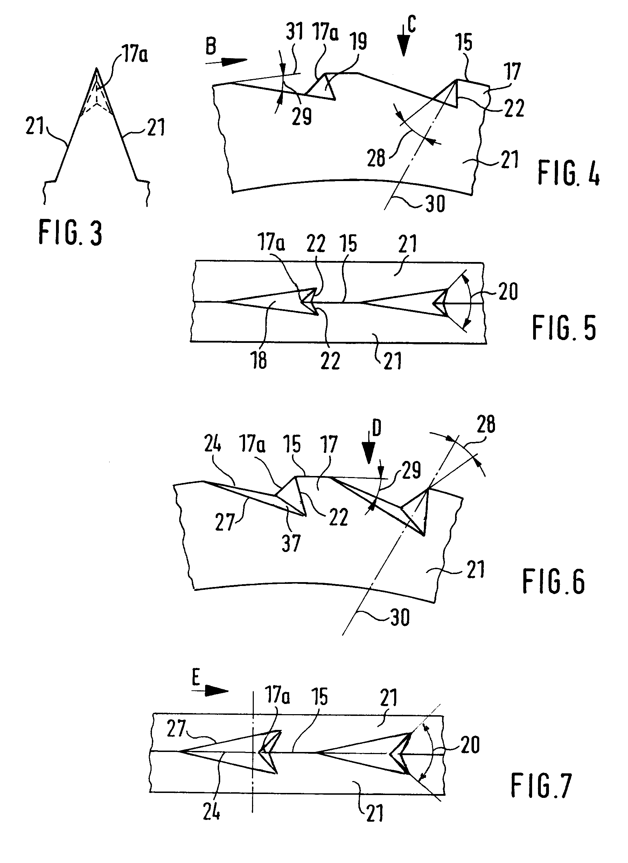

Die Figuren 6, 7 und 8 zeigen eine Abwandlungsform, die sich von der eben beschriebenen Ausführungsform lediglich bezüglich der Ausbildung des Grundes der Ausnehmungen 16 unterscheidet. Bei der Abwandlungsform ist nämlich die dem Grund der Ausnehmungen 16 darstellende Fläche nicht als ebene Fläche 18 sondern als Keil 23 ausgebildet, wobei die Keilkante 24 in den Gewindegrat 15 übergeht. Die Keilflächen 25 des Keils 23 bilden einen Winkel 26 von vorzugsweise 60 bis 100 Grad und schneiden die Gewindeflankenflächen 21 in den Kanten 27. Dies bewirkt, daß beim Einschrauben der Schraube das durch das Gewinde zu verdrängende Material leichter an die Schneidkanten 17a geführt wird, wodurch die Schneidwirkung der Schraube noch weiter gesteigert wird.

Beide Ausführungsformen können folgendermaßen ausgestaltet sein. So kann die Tiefe der die Schneidezähne 17 bildenden Ausnehmungen 16 zwischen 2/7 und 4/7 der Gewindehöhe des Gewindes 14 liegen. Die Schneidkante 17a ist zweckmäßigerweise in einem Winkel 28 zwischen 25 und 35 Grad zum Schraubenradius 30 anzustellen. Die Fläche 18 bzw. die Keilkante 24 weist vorzugsweise einen Winkel 29 zur Tangente 31 von 20 bis 30 Grad auf. Alle Übergänge der die Gewindeflankenflächen schneidenden Flächen sind so auszubilden, daß keine scharfen Kanten entstehen, die den Materialfluß beeinträchtigen würden.

Die Erfindung ist nicht auf die dargestellten und beschriebenen Ausführungsbeispiele beschränkt, vielmehr sind zahlreiche Abwandlungen möglich, ohne den Bereich der Erfindung zu verlassen. Dies betrifft insbesondere die Anzahl der Schneidzähne pro Gewindegang sowie die Tiefe und räumliche Gestaltung der die Schneidzähne bildenden Ausnehmungen 16. Wesentlich ist jedoch, daß sich die Zahnung des Gewindegangs bis zum Spitzende der Schraubenspitze erstreckt und daß zumindest der sich an die Schraubenspitze anschließende erste Gewindegang des Schraubenschafts eine solche Zahnung aufweist.

## Patentansprüche

1. Gewindeformende Schraube mit Schraubenkopf, Schraubenschaft und Schraubenspitze, deren Gewinde sich über die Schraubenspitze und zumindest teilweise über den Schraubenschaft erstreckt, wobei der Gewindegrat (15) der Gewindegänge auf der Schraubenspitze (13) und zumindest des ersten daran anschließenden Gewindegangs des Schraubenschafts (12) in Abständen durch Ausnehmungen (16) unterbrochen ist, dadurch gekennzeichnet, daß die zwischen den Ausnehmungen (16) stehenbleibenden Gratabschnitte bugförmige Schneidezähne (17) bilden, deren in der gleichen Ebene wie der Gewindegrat verlaufende Schneidkanten (17a) in Einschraubrichtung des Gewindes (14) weisen und unter einen negativen Winkel (28) bezüglich der radialen Richtung (30) angestellt sind.

2. Schraube nach Anspruch 1, dadurch gekennzeichnet, daß die Schneidezähne (17) im Bereich der Schraubenspitze (13) zum Spitzende hin bezüglich Anzahl und/oder Größe abnehmen.

3. Schraube nach Anspruch 1 oder 2, dadurch gekennzeichnet, daß der Grund der die Schneidzähne (17) bildenden Ausnehmungen (16) als plane Fläche (18) oder als Keil (24, 27), ausgebildet ist.

4. Schraube nach einem der Ansprüche 1 bis 3, dadurch gekennzeichnet, daß pro Gewindegang sechs bis zwanzig Schneidezähne (17) vorgesehen sind.

5. Schraube nach einem der Ansprüche 1 bis 4, dadurch gekennzeichnet, daß die die Schneidezähne (17) bildenden Ausnehmungen (16) eine Tiefe aufweisen, welche 2/7 bis 4/7 der Gewindehöhe entspricht.

6. Schraube nach einem der Ansprüche 1 bis 5, daß der negative Anstellwinkel (28) der Schneidkanten (17a) der Schneidezähne (17) 25 bis 35 Grad beträgt.

7. Schraube nach einem der Ansprüche 1 bis 6, dadurch gekennzeichnet, daß das Gewinde ein mehrgängiges Gewinde ist.

## Claims

1. A self-tapping screw comprising a screwhead, screw shank and screw point, the screwthreading of which extends over the screw point and at least partially over the screw shank, the ridge (15) of the turns of the screwthread at the point (13) and at least the first adjoining turn of the screwthread of the shank (12) being interrupted at intervals by recesses (16), characterised in that the ridge portions remaining between the recesses (10) form bow-shaped cutting teeth (17), whose cutting edges (17a) extending in the same plane as the screwthread ridge point in the direction in which the screwthread (14) is screwed in and are set at a negative angle (28) with respect to the radial direction (30).

2. A screw according to claim 1, characterised in that the cutting teeth (17) in the region of the screw point (13) decrease in respect of number and/or size towards the end of the point.

3. A screw according to claim 1 or 2, characterised in that the base of the recesses (14) forming the cutting teeth (17) is constructed as a flat surface (18) or as a wedge (24, 27).

4. A screw according to any one of claims 1 to 3, characterised in that six to twenty cutting teeth (17) are provided for each turn of the screwthread.

5. A screw according to any one of claims 1 to 4, characterised in that the recesses (16) forming the cutting teeth (17) have a depth equal to 2/7 to 4/7 of the screwthread height.

6. A screw according to any one of claims 1 to 5, characterised in that the negative angle of incidence (28) of the cutting edges (17a) of the cutting teeth (17) is 25 to 35°.

7. A screw according to any one of claims 1 to 6, characterised in that the screwthread is a multi-start screwthread.

## Revendications

1. Vis autotaraudeuse avec tête de vis, tige de vis et pointe de vis dont le filetage s'étend sur la pointe et au moins en partie sur la tige, l'arête (15) des filets de la pointe (13) de la vis et au moins du premier filet, se raccordant à ceux-ci, de la tige (12), étant interrompue à intervalles par des évidements (16), caractérisée en ce que les parties d'arête, restant entre les évidements (16), forment des dents coupantes (17) en forme de nez dont les bords coupants (17a), s'étendant dans le même plan que l'arête du filetage, sont dirigés dans le sens du vissage du filetage (14) et sont inclinés sous un angle (28) négatif par rapport à la direction radiale (30).

2. Vis selon la revendication 1, caractérisée en ce que les dents coupantes (17) diminuent dans la zone de la pointe (13) de la vis vers l'extrémité de la pointe, en ce qui concerne leur nombre et/ou leurs dimensions.

3. Vis selon les revendications 1 ou 2, caractérisée en ce que le fond des évidements (16), formant les dents coupantes (17), est une surface (18) plane ou un coin (24, 27).

4. Vis selon l'une des revendications 1 à 3, caractérisée en ce qu'il est prévu six à vingt dents coupantes (17) par filet.

5. Vis selon l'une des revendications 1 à 4, caractérisée en ce que les évidements (16), formant les dents coupantes (17), ont une profondeur qui comprise entre 2/7 et 4/7 de la hauteur du filetage.

6. Vis selon l'une des revendications 1 à 5, caractérisée en ce que l'angle d'inclinaison (28) négatif des bords coupants (17a) des dents coupantes (17) est compris entre 25 et 35 degrés.

7. Vis selon l'une des revendications 1 à 6, caractérisée en ce que le filetage est à filets multiples.
